# EUROPÄISCHE PATENTSCHRIFT

(11) **EP 4 102 024 B1**
(45) Veröffentlichungstag und Bekanntmachung des Hinweises auf die Patenterteilung: **31.01.2024**
(21) Anmeldenummer: 21178674.4
(22) Anmeldetag: 10.06.2021
(51) Int. Cl.: E06B 9/24, E06B 9/28, E06B 9/264, G02B 26/08

(54) **LICHTTECHNISCHES MODUL FÜR EINE GEBÄUDEFASSADE**
LIGHTING MODULE FOR A BUILDING FACADE
MODULE TECHNIQUE D'ÉCLAIRAGE POUR UNE FAÇADE DE BÂTIMENT

(43) Veröffentlichungstag der Anmeldung: 14.12.2022
(73) Patentinhaber: Nanoscale Glasstec GmbH, 34132 Kassel (DE)
(72) Erfinder: Hillmer, Hartmut, 34128 Kassel (DE); Xu, Guilin, 34128 Kassel (DE)
(74) Vertreter: Walther Bayer Faber Patentanwälte PartGmbB

(56) Entgegenhaltungen:
- WO-A1-2014/082092
- WO-A1-2014/088777
- US-B2- 7 684 105
- HILLMER HARTMUT ET AL: "MOEMS micromirror arrays in smart windows for daylight steering", JOURNAL OF OPTICAL MICROSYSTEMS, SOCIETY OF PHOTO-OPTICAL INSTRUMENTATION ENGINEERS, 1000 20TH ST. BELLINGHAM WA 98225-6705 USA, Bd. 1, Nr. 1, 26. Januar 2021 (2021-01-26) , Seite 14502, XP060139330, ISSN: 2708-5260, DOI: 10.1117/1.JOM.1.1.014502 [gefunden am 2021-01-26]

## Beschreibung

Die vorliegende Erfindung betrifft ein lichttechnisches Modul für eine Gebäudefassade, insbesondere für eine Verglasung, sowie ein System zur Gestaltung einer Gebäudefassade.

### STAND DER TECHNIK

Shutterarrays und Spiegelarrays, welche aus einer Vielzahl von aktuierbaren Mikroelementen in Form von Mikroshuttern oder Mikrospiegeln aufgebaut sind, gehören zu den sogenannten mikro-optoelektro-mechanischen Systemen (MOEMS) und werden zur hochaufgelösten Lichtmodulation oder Lichtlenkung in einer Vielzahl von unterschiedlichen Anwendungen etwa als Beamerelemente, Router, Verschlüsse oder Blenden eingesetzt, beispielsweise auf den Gebieten der der Projektionsanzeigen, der optischen Informationsverarbeitung, der Mikroskopie, der Lithographie, der Laserstrukturierung oder auch als Sonnenlicht leitende Elemente in Verglasungen von Gebäuden.

Bei den das Array konstituierenden Mikroelementen handelt es sich um miniaturisierte optische Elemente im Größenbereich weniger Quadratmikrometer bis Quadratmillimeter, deren Stellung, und somit lichttechnische Wirkung, mittels aktiver oder passiver Ansteuerung aktuierbar ist. Die Mikroelemente sind dabei wahlweise als rein lichtundurchlässige Mikroverschlüsse ausgebildet oder sie weisen als Mikrospiegel eine spiegelnde Oberfläche auf. Zur Herstellung der Arrays werden typische Dünnschichtverfahren angewandt, insbesondere unter Einsatz von Depositionsprozessen, Lithographie- und Ätzschritten sowie von Opferschichttechniken.

Beispielsweise offenbart die US 7,684,105 B2 ein Mikroblendensystem mit einer Anordnung von verspannten aufrollbaren Mikroblenden, die jeweils einen an einem Substrat befestigten Ankerabschnitt und einen beweglichen Abschnitt aufweisen. Die Mikroblenden werden mittels elektrostatischer Kräfte aktuiert zwischen einer entrollten Konfiguration, in der der bewegliche Abschnitt das Substrat verdeckt, und einer aufgerollten Konfiguration, in der der bewegliche Abschnitt das Substrat freilegt. Eine transparente leitfähige Schicht ermöglicht das Anlegen eines elektrischen Feldes zur Aktuierung der Mikroblenden.

Die WO 2014/082092 A1 offenbart Mehrscheibenlaminate, welche als Verglasung mit aktiver Lichtdämmfunktion vorgesehen sind, wozu die Mehrscheibenlaminate eine Kombination von elektrochromen Vorrichtungen und elektromechanischen Blenden zur kontinuierlichen Variation der Transparenz der Verglasung aufweisen.

Lichttechnische Module mit Mikrospiegeln basierend auf MOEMS sind im Stand der Technik zur aktiven Lichtlenkung an einer Gebäudefassade bekannt. Beispielsweise offenbart die DE 103 58 967 A1 ein Array in Form einer Mikrospiegelanordnung für fassadenbauliche Zwecke, bei welcher Mikrospiegelelemente in einer regelmäßigen flächigen Matrixanordnung vorliegen und einzeln oder in Gruppen über ein Adressierungsnetzwerk von einem zentralen Steuergerät angesteuert werden. Dadurch ist die Möglichkeit einer aktiven Sonnenlichtlenkung mit hoher Ortsauflösung geschaffen, welche eine bedarfsangepasste und personalisierte Beleuchtungssituation in dem hinter der Fassade liegenden Raum ermöglicht. Detaillierte Angaben zu Fertigung, Funktion und Anwendungsprinzip eines solchen Mikrospiegel-Arrays finden sich in Hillmer et al., Jpn. J. Appl. Phys. 57, 08PA07 (2018).

Weiterhin offenbaren Hillmer et al., Journal of Optical Microsystems 1, 014502 (2021) (siehe auch XP060139330) MOEMS Mikrospiegelarrays zur Tageslichtführung in Gebäudeverglasungen. Die darauf basierenden Module weisen in Bezug auf ihre vorgesehene Anordnung an der Gebäudefassade eine Frontseite, eine Rückseite, eine Oberseite und eine Unterseite auf, wobei die Rückseite der Module in Richtung des Gebäudeinneren und die Oberseite der Module obenliegend zu orientieren sind. Die Module umfassen weiterhin eine frontseitige Grundplatte und eine rückseitige Grundplatte, welche jeweils lichtdurchlässig ausgebildet sind, wobei in einem Zwischenraum zwischen den Grundplatten die Mikrospiegel aufgenommen sind. Die Mikrospiegel sind dabei scharnierartig auf der Innenseite der frontseitigen Grundplatte derart angeordnet, dass jeder Mikrospiegel, ausgehend von einer lichtundurchlässigen geschlossenen Stellung um eine horizontale Schwenkachse in Richtung der Unterseite des Moduls in wenigstens eine lichtdurchlässige geöffnete Stellung schwenkbar ist. In der geschlossenen Stellung liegen die Mikrospiegel im Wesentlichen planparallel an der frontseitigen Grundplatte an und reflektieren einfallendes Sonnenlicht in den Außenraum der Gebäudefassade zurück. Werden eine Vielzahl von Mikrospiegeln in ihre geschlossene Stellung gebracht, so resultiert daraus eine großflächige Verspiegelung der Gebäudefassade, was zu derart ausgeprägten Lichtreflexionen führen kann, dass beispielsweise angrenzender Straßenverkehr oder Nachbargebäude störend beeinträchtigt werden. Zudem ist typischerweise auch die Hinterseite der Spiegelelemente metallisch spiegelnd ausgebildet, sodass bei geschlossener Stellung der Spiegelelemente auch eine Spiegelwirkung in Richtung auf die hinter der Verglasung befindlichen Räumlichkeiten entsteht. Eine großflächige Innenverspiegelung der Verglasung kann aber von in den betreffenden Räumlichkeiten befindlichen Personen nachteiligerweise als unbehaglich empfunden werden.

Die Einkleidung von Gebäudefassaden mit lichttechnischen Modulen zur Lichtlenkung aus dem Stand der Technik steht zudem in Konkurrenz zu einer Nutzung dieser Flächen für die photovoltaische Energiegewinnung, welche heutzutage vielfach durch eine großflächige Integration von Solarmodulen in Gebäudefassaden samt deren Verglasungen erfolgt.

Beispielsweise offenbart die WO 2014/088777 A1 eine photovoltaische Einrichtung zur Verwendung als "Smart Glas", umfassend lichtdurchlässige Front- und Rückplatten, eine Anordnung von Blenden mit einer photovoltaischen Schicht, wobei die Blenden parallel zu den Platten zwischen einer geöffneten und einer geschlossenen Stellung bewegbar sind, und eine Anordnung von Photovoltaik-Einheiten hinter den Blenden, wobei die Anordnung von Photovoltaik-Einheiten und Blenden in ihrer Form und/oder Größe so strukturiert sind, dass in der geöffneten Stellung der Blenden ein erster Teil des einfallenden Umgebungslichts durch die Rückplatte hindurchgelassen wird und ein zweiter Teil des Umgebungslichts auf die photovoltaische Schicht der Blenden auftrifft, und dass in der geschlossenen Stellung ein erster Teil des Umgebungslichts auf die photovoltaische Schicht der Blenden und ein zweiter Teil des Umgebungslichts auf die Photovoltaik-Einheiten auftrifft. Die Einrichtung hat somit die Funktion eines Solarmoduls mit einer schaltbaren begrenzten Transmission.

### OFFENBARUNG DER ERFINDUNG

Es ist daher die Aufgabe der vorliegenden Erfindung ein lichttechnisches Modul für eine Gebäudefassade vorzuschlagen, welches die vorgenannten Nachteile des Standes der Technik überwindet und insbesondere zum Aufbau eines individualisierten und bedarfsangepassten Systems zur Gestaltung einer Gebäudefassade geeignet ist.

Diese Aufgabe wird von einem lichttechnischen Modul gemäß Anspruch 1 und einem darauf basierenden System zur Gestaltung einer Gebäudefassade gemäß Anspruch 12 gelöst. Vorteilhafte Weiterbildungen der Erfindung sind in den abhängigen Ansprüchen angegeben.

Die Erfindung schließt die technische Lehre ein, dass das lichttechnische Modul in Bezug auf die vorgesehene Anordnung an einer Gebäudefassade eine Frontseite, eine Rückseite, eine Oberseite und eine Unterseite aufweist und wobei das Modul wenigstens umfasst:
- eine frontseitige Grundplatte und eine rückseitige Grundplatte, wobei die Grundplatten lichtdurchlässig ausgebildet sind und wobei zwischen den Grundplatten ein Zwischenraum gebildet ist, und
- eine Mehrzahl von in dem Zwischenraum aufgenommenen Mikroblattelementen, wobei jedes Mikroblattelement einen lichtundurchlässigen Blattabschnitt mit einer lichttechnischen Vorderseite und einer lichttechnischen Hinterseite aufweist und wobei jedes Mikroblattelement mittels eines randseitigen Befestigungsabschnitts scharnierartig auf der frontseitigen Grundplatte oder auf der rückseitigen Grundplatte angeordnet ist, derart, dass jeder Blattabschnitt ausgehend von einer lichtundurchlässigen geschlossenen Stellung, in welcher der Blattabschnitt planparallel an der Grundplatte anliegt,
um eine horizontale Schwenkachse in Richtung der Oberseite oder der Unterseite in wenigstens eine lichtdurchlässige geöffnete Stellung schwenkbar ist, und wobei die Vorderseite oder die Hinterseite eine Spiegelwirkung für sichtbares Licht und/oder nahes Infrarot aufweist, wobei die jeweils andere Seite des Blattabschnitts eine davon abweichende lichttechnische Wirkung aufweist.

Der Kerngedanke der Erfindung besteht darin, eine große Vielfalt an Gestaltungsmöglichkeiten betreffend die lichttechnische Wirkung des erfindungsgemäßen Lichtmoduls dadurch zu schaffen, dass neben der Vorderseite auch die Hinterseite der Blattabschnitte der Mikroblattelemente eine dedizierte lichttechnische Funktion aufweist, und dass die Anordnung der Mikroblattelemente an frontseitiger oder rückseitiger Grundplatte in Kombination mit einer wählbaren Schwenkrichtung der Blattabschnitte unterschiedliche Charakteristika betreffend die Lichtlenkwirkung von auf das Modul einfallendem Sonnenlicht ermöglichen. Als Vorderseite wird vorliegend diejenige Seite bezeichnet, welche in der geschlossenen Stellung des Blattabschnitts zur Frontseite des Moduls exponiert ist. Bei bestimmungsgemäßer Anordnung des Moduls auf einer Gebäudeverglasung sind in der geschlossenen Stellung des Blattabschnitts somit die Vorderseite von außerhalb des Gebäudes und die Rückseite innerhalb der betreffenden Gebäuderäumlichkeit sichtbar. Die Konfiguration und Anordnung der Mikroblattelemente eines Moduls sind dabei vorzugsweise einheitlich, wobei allgemein auch eine diesbezügliche Variation innerhalb des Moduls vorliegen kann.

Die Blattabschnitte weisen vorzugsweise eine einheitlich rechteckige Kontur und Größe auf, wobei prinzipiell auch komplexere Konturen oder Größenverhältnisse geeignet sein können, mit denen eine im Wesentlichen vollständige Flächenüberdeckung der zueinander planparallel ausgerichteten Grundplatten realisierbar ist. Die Mikroblattelemente weisen einen Schichtaufbau auf, welcher mindestens eine lichtundurchlässige Schicht umfasst. Bei geschlossener Stellung aller Blattabschnitte, in welcher diese im Wesentlichen planparallel zu den Grundplatten ausgerichtet sind, ist das Modul somit lichtundurchlässig, beispielsweise kann dann Sonnenlicht nicht durch ein zugeordnetes Fenster in das Gebäudeinnere einstrahlen. Neben einer lichtundurchlässigen Schicht weisen die Mikroblattelemente typischerweise weitere Schichten mit anderen optischen Eigenschaften auf, insbesondere zur Bildung der lichttechnischen Vorder- und Rückseiten der Blattabschnitte.

Erfindungsgemäß weisen die Vorderseite oder die Hinterseite der Blattabschnitte eine Spiegelwirkung für sichtbares Licht und/oder nahes Infrarot (NIR) auf, wobei die Vorderseite oder die Hinterseite insbesondere als Spiegelschicht aus einem Metall ausgebildet sind. Die lichttechnische Funktion der verspiegelten Vorder- oder Hinterseiten liegt primär in der Lichtlenkung von einfallendem Sonnenlicht in das Gebäudeinnere, d.h., in die hinter dem betreffenden Modul angeordnete Räumlichkeit. Je nach Anordnung der Mikroblattelemente an frontseitiger oder rückseitiger Grundplatte und in Abhängigkeit von der Schwenkrichtung der Blattabschnitte dient dazu entweder die Vorderseite oder die Hinterseite der Blattabschnitte. Bei einem Modul aus dem Stand der Technik (Hillmer et al., Journal of Optical Microsystems 1, 014502 (2021)) sind die Mikroblattelemente an der frontseitigen Grundplatte angeordnet, und in der geschlossenen Stellung ist die verspiegelte Vorderseite der Blattabschnitte zur Frontseite des Moduls exponiert, wodurch im Praxiseinsatz an einer Gebäudefassade eine unerwünschte Störung des umgebenden Verkehrs durch starke Lichtspiegelung erfolgen kann. Dies kann erfindungsgemäß dadurch vermieden werden, dass die Rückseite der Blattabschnitte die gewünschte Spiegelwirkung aufweist und die Verschwenkung ausgehend von der geschlossenen Stellung in Richtung der Unterseite des Moduls erfolgt. Die in der geschlossenen Stellung dem Verkehr zugewandte Vorderseite ist in einer solchen Ausführungsform nicht an der Lichtlenkung von Sonnenlicht in das Gebäudeinnere beteiligt und muss folglich keine Spiegelwirkung aufweisen, sodass eine unerwünschte Blendung des Verkehrs unterbleibt. Insbesondere ist es also zweckmäßig, wahlweise die Vorderseite oder die Hinterseite der Blattabschnitte mit einer Spiegelwirkung zu versehen und der jeweils anderen Seite der Blattabschnitte eine davon abweichende lichttechnische Funktion zuzuordnen.

Beispielsweise weisen die Vorderseite oder die Hinterseite der Blattabschnitte eine Streuwirkung für sichtbares Licht auf, wobei die Vorderseite oder die Hinterseite insbesondere eine zweckmäßige Oberflächenrauheit aufweisen. Eine zweckmäßige Streuwirkung liegt vor, wenn auftreffendes Licht nicht einer gerichteten, sondern einer diffusen Reflexion unterliegt, sodass eine ausgeprägte Spiegelwirkung der Mikroblattelemente unterbleibt. Eine solche lichttechnische Wirkung der Mikroblattelemente kann insbesondere dann gewünscht sein, wenn bei starker Sonneneinstrahlung die Blattabschnitte in die geschlossene Stellung überführt sind, von außen betrachtet aber keine Spiegelwirkung entstehen darf, welche beispielsweise den umliegenden Straßenverkehr blenden könnte. Auch für im Gebäudeinneren befindliche Personen ist ein mattes Erscheinungsbild der abgedunkelten Verglasungen typischerweise angenehmer als eine großflächige Spiegelwirkung.

In einer weiteren Ausführungsform weisen die Vorderseite oder die Hinterseite der Blattabschnitte eine Absorptionswirkung für sichtbares Licht und/oder nahes Infrarot auf, wobei die Vorderseite oder die Hinterseite insbesondere ein photovoltaisches Schichtsystem aufweisen, und das Modul insbesondere zur photovoltaischen Energiegewinnung ausgebildet ist. Vorzugsweise ist das absorbierende photovoltaische Schichtsystem auf der Vorderseite der Blattabschnitte angeordnet, welche in der geschlossenen Stellung der Blattabschnitte nach außen, d.h., in Richtung auf das einfallende Sonnenlicht exponiert ist. Somit kann beispielsweise intensive Sonneneinstrahlung zur Mittagszeit, welche durch Schließen der Mikroblattelemente aus den Räumlichkeiten ferngehalten werden soll, effektiv zur photovoltaischen Energiegewinnung genutzt werden. Somit ermöglicht das erfindungsgemäße Modul beispielsweise eine Kombination von spiegelnder Lichtlenkwirkung der Rückseiten der Blattabschnitte für die Innenraumbeleuchtung mit einer photovoltaischen Funktion der Vorderseiten und gleichzeitiger Vermeidung von Reflexen, welche den Straßenverkehr stören könnten, sodass hier der diesbezügliche Antagonismus bei Systemen zur Gestaltung von Gebäudefassaden nach dem Stand der Technik überwunden werden kann.

In einer weiteren Ausführungsform sind die Vorderseite oder die Hinterseite der Blattabschnitte zur Erzeugung eines dedizierten Farbeindrucks ausgebildet, insbesondere mittels einer dielektrischen Beschichtung. Das Modul kann in dieser Ausführungsform als ein gestalterisches Element der Gebäudefassade dienen, d.h., die lichttechnische Wirkung liegt in der Erzeugung eines bestimmten Farbeindrucks für einen Betrachter. Beispielsweise können mit einer Vielzahl hinsichtlich der Farbeigenschaften unterschiedlich ausgebildeter Module auch Farbmuster erzeugt werden, welche zudem aufgrund der Aktuierbarkeit der einzelnen Mikroblattelemente auch dynamisch erzeugt werden können. Die jeweilige Seite der Blattabschnitte kann beispielsweise als ein Interferenzspiegel basierend auf einer dielektrischen Einfach- oder Mehrfachbeschichtung ausgebildet sein. Alternativ können geeignete Farbpigmente oder Nanopartikel mittels einer Beschichtung aufgebracht sein. Der Farbeindruck entsteht entweder durch Interferenz oder Absorption eines Teils des weißen Sonnenspektrums.

Insbesondere weisen die Mikroblattelemente jeweils einen Schichtaufbau auf, welcher wenigstens eine druckverspannte Schicht und eine zugverspannte Schicht umfasst, wobei entlang des Blattabschnitts jedes Mikroblattelements eine druckverspannte Kompensationsschicht auf der zugverspannten Schicht angeordnet ist, derart, dass jedes Mikroblattelement in die folgenden Abschnitte unterteilt ist:
- den Blattabschnitt, welcher global spannungsfrei ausgebildet ist und zwei im Wesentlichen planparallele Oberflächen aufweist,
- den randseitigen Befestigungsabschnitt, welcher starr auf einer der Grundplatten angeordnet ist, und
- einen dazwischenliegenden Scharnierabschnitt, welcher eine eigenspannungsinduzierte Krümmung aufweist, wodurch eine geöffnete Stellung des Mikroblattelements gebildet ist.

Dabei befinden sich die Mikroblattelemente bei Abwesenheit einer externen Aktuierung in einer maximal geöffneten Stellung, welche aufgrund der vorliegenden Eigenspannungen durch eine Krümmung des Scharnierabschnitts zwischen dem auf der Grundplatte formschlüssig fixierten Befestigungsabschnitt und dem spannungskompensierten Blattabschnitt zustande kommt. Beispielsweise weist der Scharnierabschnitt einen Krümmungsradius auf, welcher ein Hundertstel bis ein Drittel der Länge der längsten Seite der Kontur des jeweiligen Mikroblattelements beträgt.

Mit weiterem Vorteil ist das Schwenken der Blattabschnitte zwischen der geschlossenen Stellung und der wenigstens einen geöffneten Stellung mittels eines elektrostatischen Wirkprinzips aktuierbar, wozu die frontseitige Grundplatte und/oder die rückseitige Grundplatte eine elektrisch leitfähige Schicht aufweisen und die Blattabschnitte jeweils eine Elektrode aufweisen oder bilden, derart, dass durch Anlegen von elektrischen Spannungssignalen zwischen den Elektroden und der zugehörigen Grundplatte einzelne Mikroblattelemente und/oder Gruppen von Mikroblattelementen aktuierbar sind.

Insbesondere weist jedes Mikroblattelement wenigstens eine elektrisch leitfähige Schicht auf, wodurch eine Elektrodenschicht gebildet ist, wobei die zugehörige Grundplatte einen Schichtaufbau aufweist, welcher eine lichtdurchlässige, elektrisch leitfähige Bodenschicht und eine lichtdurchlässige, elektrisch isolierende Isolationsschicht umfasst, wobei der Befestigungsabschnitt jedes Mikroblattelements auf der Isolationsschicht angeordnet ist.

Beispielsweise ist der Blattabschnitt in der maximal geöffneten Stellung im Wesentlichen orthogonal zu den Grundplatten ausgerichtet. In einer solchen Senkrechtstellung ist eine maximale Lichttransmission gegeben, und diese Stellung wird eingenommen, wenn die Mikroblattelemente keiner elektrostatischen Kraft durch eine angelegte elektrische Spannung unterliegen, so dass die Scharnierabschnitte rein nach Maßgabe ihrer mechanischen Eigenspannungen aufgerollt sind.

Zwischen der maximal geöffneten Stellung und der geschlossenen Stellung der Blattabschnitte können vorzugsweise weitere Zwischenstellungen eingenommen werden, welche bzgl. des Transmissionsgrads entsprechende Grauwerte repräsentieren. Ausgehend von der maximal geöffneten Stellung der Blattabschnitte kann durch Anlegen einer kontinuierlich steigenden elektrischen Spannung zwischen Grundplatte und Elektroden ein stufenloses Schließen der Mikroblattelemente erfolgen bis zu einer Grenzspannung, ab welcher die Mikroblattelemente vollständig schließen. Diese Vielfalt von dediziert einstellbaren Öffnungswinkeln der Blattabschnitte gegenüber den Grundplatten ist insbesondere zur gezielten Lichtlenkung mit verspiegelten Blattabschnitten nutzbar.

Bei anliegender Aktuierungsspannung verlaufen sowohl von der Hinterseite als auch von der Vorderseite der Mikroblattelemente elektrische Feldlinien zur leitfähigen Bodenschicht. Um ein Abklappen der Blattabschnitte entgegen der elastischen Rückstellkraft der Scharnierabschnitte auf die falsche Seite zu verhindern, weist der Befestigungsabschnitt jedes Mikroblattelements in einer vorteilhaften Ausführungsform eine dielektrische Abschirmschicht auf. Der Zweck dieser Abschirmschicht besteht darin, zu einer Erweiterung des aktuierbaren Schwenkbereich des Blattabschnitts auf Winkelbereiche von mehr als 90° beizutragen, beispielsweise auf 120°. Die maximal geöffnete Stellung wird im Zustand ohne anliegende elektrische Spannung eingenommen und wird durch das Ausmaß der Krümmung des Scharnierabschnitts bestimmt. Ist der Blattabschnitt in der maximal geöffneten Stellung um mehr als 90° gegenüber der geschlossenen Stellung, in welcher der Blattabschnitt planparallel an der Grundplatte anliegt, verschwenkt, so entsteht beim Anlegen einer elektrischen Aktuierungsspannung eine elektrostatische Anziehung zwischen der Bodenschicht der Grundplatte und dem Blattabschnitt, welche auf ein weiteres Aufschwenken des Mikroblattelements gerichtet ist und damit der beabsichtigten Aktuierungslogik entgegenwirkt. Um zur Reduzierung der elektrischen Feldstärke beizutragen, und damit der parasitären Anziehungskraft, wird die dielektrische Abschirmschicht im Befestigungsabschnitt zwischen der Bodenschicht und dem darüber geschwenkten Blattabschnitt angeordnet. Ferner können in Ausführungsbeispielen mit photovoltaischem Schichtsystem die Potentialverhältnisse durch zweckmäßige Orientierung der n- und p-dotierten Schichten so gewählt werden, dass die elektrische Feldstärke an der entsprechenden Seite der Blattabschnitte weiter abgeschwächt wird. Die mit diesen Maßnahmen realisierbare Erweiterung des Schwenkbereichs der Blattabschnitte ermöglicht eine besonders umfassende Ausnutzung der lichttechnischen Funktionen der Vorder- und Hinterseiten.

Beispielsweise weisen die Vorderseite und/oder die Hinterseite der Blattabschnitte ein photovoltaisches Schichtsystem auf der Elektrodenschicht auf, insbesondere einen pn-Übergang basierend auf organischen oder anorganischen Halbleitern. Beispielsweise stellen Verbindungshalbleiter wie CuInGaSe₂, CdTe, CdSe, GaAs oder CdInGaSe geeignete Werkstoffe dar und können durch Dünnschicht-Depositionsprozesse abgeschieden werden. Das photovoltaische Schichtsystem ist vorzugsweise auf der Vorderseite der Blattabschnitte angeordnet, d.h., in der geschlossenen Stellung dem Sonnenlicht zugewandt. Prinzipiell kann aber ebenso die Hinterseite zur photovoltaischen Energiegewinnung ausgebildet sein und indirektes Sonnenlicht oder in der zugeordneten Räumlichkeit verwendetes Kunstlicht absorbieren.

Vorzugsweise weisen die Mikroblattelemente eine rechteckförmige Kontur mit einer Kantenlänge von 10 Mikrometer bis 2 mm auf und/oder sie sind in regelmäßiger Matrixform aus parallelen Zeilen und parallelen Spalten angeordnet, wobei die Gesamtheit der Mikroblattelemente im geschlossenen Zustand insbesondere eine im Wesentlichen vollständige Flächenüberdeckung der Grundplatten bildet.

In vorteilhafter Ausführungsform weist das erfindungsgemäße Modul ein Adressierungsnetzwerk aus planaren Leitungen auf, welche elektrische Verbindungen zwischen den Elektrodenschichten und/oder den photovoltaischen Schichten von individuellen Mikroblattelementen oder von Gruppen von Mikroblattelementen und einer randseitigen Modulschnittstelle zur computergesteuerten Adressierung und Aktuierung der Mikroblattelemente und/oder zum Abgriff einer photovoltaischen generierten Spannung bilden. Ein derartiges Adressierungsnetzwerk samt Modulschnittstelle erlaubt die Verwendung eines entfernt gelegenen Steuergerätes zur Ansteuerung der einzelnen Mikroblattelemente und insbesondere eine Integration einer Vielzahl von erfindungsgemäßen Modulen in ein System zur Gestaltung einer Gebäudefassade unter Verwendung eines einzelnen zentralen Steuergerätes für das gesamte System. Alternativ kann auch die Verwendung mehrerer dezentraler Steuergeräte sinnvoll sein, beispielsweise wenn die Etagen eines ausgerüsteten Gebäudes von unterschiedlichen Parteien belegt sind und diese jeweils eine individuelle Systemsteuerung wünschen.

Die vorliegende Erfindung betrifft weiterhin ein System zur Gestaltung einer Gebäudefassade, insbesondere einer Verglasung, wenigstens umfassend eine Mehrzahl von erfindungsgemäßen lichttechnischen Modulen gemäß einer der vorgenannten Ausführungsformen und mindestens ein mit den Modulen elektrisch verbundenes Steuergerät zur Aktuierung der Mikroblattelemente der Module, wobei betreffend die Anordnung der Module vorgesehen ist, die Rückseite der Module in Richtung des Gebäudeinneren und die Oberseite der Module obenliegend zu orientieren. Die Frontseite der Module ist dann direkter oder indirekter Sonneneinstrahlung exponiert und die Rückseite bei Anbringung an einer Verglasung der dahinter befindlichen Räumlichkeit zugewandt. Der Vollständigkeit halber sei darauf hingewiesen, dass bei der Lagebezeichnung "obenliegend" Bezug auf das Schwerefeld der Erde genommen wird, d.h., die Oberseite der Module weist in der vorgesehenen Anordnung an der Gebäudefassade einen größeren Abstand zum Erdboden auf als die jeweilige Unterseite.

Insbesondere ist die Konfiguration der Module des erfindungsgemäßen Systems betreffend die Anordnung der Mikroblattelemente, die Schwenkrichtung und/oder die lichttechnische Wirkung der Vorderseiten und der Hinterseiten der Blattabschnitte an die lichttechnischen Anforderungen der Gebäudefassade, den Gebäudestandort und die Ausrichtung der Gebäudefassade bzgl. der Himmelsrichtungen angepasst. Beispielsweise weisen die Module individuell unterschiedliche Konfigurationen auf, sodass die Module an die lichttechnischen Anforderungen des jeweils zugehörigen Abschnitts der Gebäudefassade angepasst sind. Beispielsweise kann es geboten sein, für gewisse Abschnitte der Gebäudefassade eine nach außen gerichtete Spiegelwirkung der Module bei geschlossener Stellung der Mikroblattelemente zu unterdrücken, etwa um Blendung von umgebendem Verkehr zu vermeiden, oder die Bestückung der Gebäudefassade mit photovoltaisch aktiven Modulen beschränkt sich auf solche Fassadenabschnitte, die eine Exposition nach Süden, Osten und Westen aufweisen.

Neben der Lenkung und photovoltaischen Nutzung von sichtbarem Sonnenlicht ist das erfindungsgemäße System auch zur Manipulation von Strahlung aus dem nahen und mittleren Infrarotspektrum ausgebildet und kann somit zweckmäßig für das Wärmemanagement des Gebäudes eingesetzt werden. Beispielsweise können geschlossene Module nachts oder im Winter zur Rückhaltung von Wärmestrahlung aus dem Gebäudeinneren beitragen, insbesondere durch eine Spiegelwirkung.

### BEVORZUGTE AUSFÜHRUNGSBEISPIELE DER ERFINDUNG

Weitere, die Erfindung verbessernde Maßnahmen werden nachstehend gemeinsam mit der Beschreibung von bevorzugten Ausführungsbeispielen der Erfindung anhand der Figuren näher dargestellt. Es zeigen:
- Fig. 1a - 1d: schematische Querschnittsansichten von Ausführungsbeispielen des erfindungsgemäßen lichttechnischen Moduls,
- Fig. 2a - 2d: schematische Querschnittsansichten von Ausführungsbeispielen mit photovoltaischem Schichtsystem,
- Fig. 3: eine schematische Querschnittsteilansicht eines Ausführungsbeispiels mit photovoltaischem Schichtsystem,
- Fig. 4: schematische Querschnittsteilansicht zur Demonstration der elektrostatischen Aktuierung,
- Fig. 5: schematische Querschnittsteilansicht zur Demonstration der Eigenspannungen eines Mikroblattelements, und
- Fig. 6: schematische Ansicht einer beispielhaften Gebäudefassade mit einem erfindungsgemäßen System aus lichttechnischen Modulen.

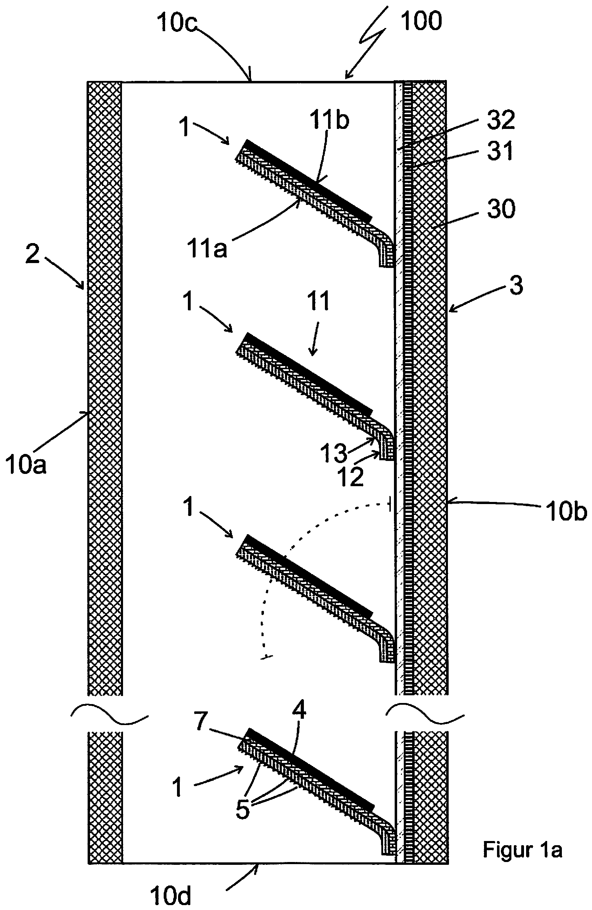

Die Fig. 1a - 1d zeigen schematische Querschnittsansichten von vier unterschiedlichen Ausführungsbeispielen des erfindungsgemäßen lichttechnischen Moduls 100, welches jeweils die frontseitige Grundplatte 2 und die rückseitige Grundplatte 3 umfasst, sowie eine Mehrzahl von Mikroblattelementen 1, welche in dem Zwischenraum zwischen den Grundplatten 2, 3 aufgenommen sind. In Bezug auf eine vorgesehene Anordnung an einer Gebäudefassade, insbesondere für eine Verglasung, weist das Modul 100 die Frontseite 10a und die Rückseite 10b sowie die Oberseite 10c und die Unterseite 10d auf. Es ist vorgesehen, das Modul 100 derart an der Gebäudefassade anzuordnen, dass die Oberseite 10c obenliegend angeordnet ist und die Rückseite 10bzum Gebäudeinneren orientiert ist. Die frontseitige Grundplatte 2 und typischerweise auch die rückseitige Grundplatte 3 sind dabei lichtdurchlässig ausgebildet.

Die Mikroblattelemente 1 umfassen jeweils den planaren Blattabschnitt 11, den auf der jeweiligen Grundplatte 2, 3 angeordneten Befestigungsabschnitt 12 und den dazwischenliegenden Scharnierabschnitt 13. Die Blattabschnitte sind in einer teilgeöffneten Stellung dargestellt, wobei der Schwenkbereich durch den strichlierten Bogen skizziert ist und beispielhaft ca. 120° ausgehend von der geschlossenen Stellung beträgt, in welcher die Blattabschnitte 11 planparallel an der zugehörigen Grundplatte 2, 3 anliegen. Die Schwenkbewegung erfolgt um eine horizontale Schwenkachse, welche hier senkrecht auf der Figurenebene steht. Alternativ kann der Schwenkbereich beispielsweise auf ca. 90° beschränkt sein, sodass im spannungsfreien Zustand der Aktuierungsmittel ein maximaler Transmissionsgrad für senkrecht auf die Grundplatten 2, 3 auftreffendes Licht gegeben ist.

Die Aktuierung der Mikroblattelemente 1, d.h., die Verschwenkung der Blattabschnitte 11 erfolgt durch Anlegen einer elektrischen Spannung zwischen der elektrisch leitfähigen Elektrodenschicht 7 und der jeweiligen elektrisch leitfähigen Bodenschicht 21, 31. Letztere ist auf einem transparenten Träger 20, 30 angeordnet und von den Mikroblattelementen 1 durch die Isolationsschicht 22, 32 elektrisch getrennt.

Die Blattabschnitte 11 weisen jeweils eine insbesondere metallische Spiegelschicht 4 mit Spiegelwirkung für sichtbares Licht und nahes Infrarot (NIR) auf, sowie gegenüberliegend eine dedizierte Oberflächenrauheit 5 mit Streuwirkung für sichtbares Licht. Je nach Sonnenstand und Stellung der Blattabschnitte 11 kann mittels der Spiegelschicht 4 eine zweckmäßige Lichtlenkung in eine Gebäuderäumlichkeit erfolgen. Eine hohe Reflektivität für NIR-Strahlung trägt zudem zur Wärmeregulierung bei, beispielsweise kann durch ein Fassadenfenster abgestrahlte Raumwärme mittels geeignet gestellter Spiegelschichten 4 in das Gebäude zurückgeworfen werden.

Die vier dargestellten Ausführungsbeispiele unterscheiden sich hinsichtlich der Anordnung der Mikroblattelemente 1 an der frontseitigen Grundplatte 2 oder der rückseitigen Grundplatte 3, sowie der jeweiligen Schwenkrichtung der Blattabschnitte 11, welche ausgehend von einer lichtundurchlässigen geschlossenen Stellung in Richtung der Oberseite 10c oder der Unterseite 10d des jeweiligen Moduls 100 schwenkbar sind.

In Fig. 1a sind die Mikroblattelemente 1 auf der rückseitigen Grundplatte 3 angeordnet und ausgehend von einer lichtundurchlässigen geschlossenen Stellung, in welcher der jeweilige Blattabschnitt 11 planparallel an der rückseitigen Grundplatte 3 anliegt, sind die Blattabschnitte 11 in Richtung der Unterseite 10d schwenkbar. Die lichttechnische Vorderseite 11a der Blattabschnitte 11 weist die Oberflächenrauheit 5 auf, und die lichttechnische Hinterseite 11b ist jeweils als die Spiegelschicht 4 ausgebildet, welche eine Spiegelwirkung für sichtbares Licht und NIR aufweist. In geschlossener Stellung der Blattabschnitte 11 wird durch die frontseitige Grundplatte 2 eingestrahltes Sonnenlicht von den Vorderseiten 11a gestreut, sodass für einen Betrachter von Seiten der frontseitigen Grundplatte 2 keine Blendwirkung durch spiegelnde Reflexion entsteht. In geöffneter Stellung der Blattabschnitte 11 wird einfallendes Sonnenlicht an den Rückseiten 11b spiegelnd reflektiert und durch die rückseitige Grundplatte 3 in eine dahinterliegende Gebäuderäumlichkeit eingestrahlt, wodurch eine gewünschte Lichtlenkwirkung erzielbar ist.

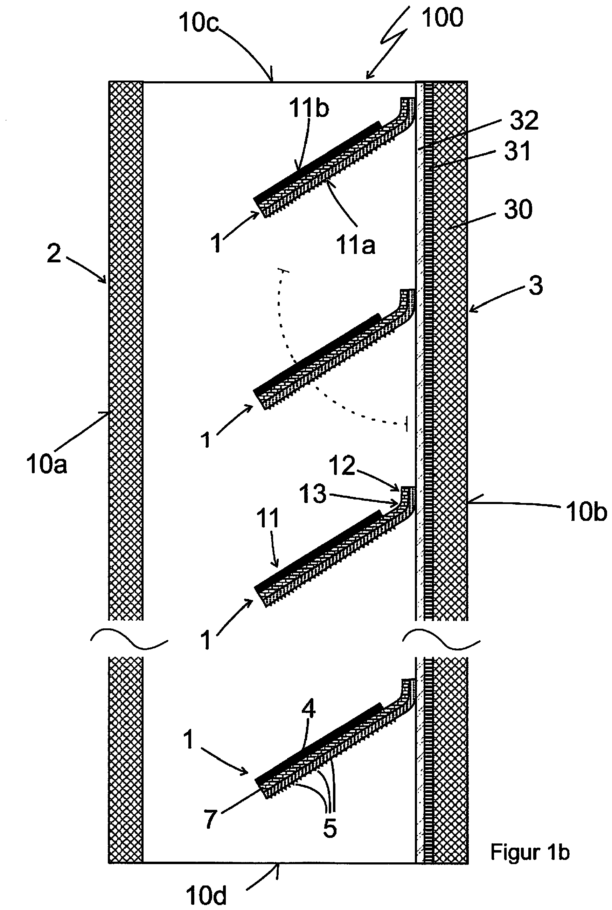

Im Ausführungsbeispiel der Fig. 1b sind die Mikroblattelemente 1 ebenfalls auf der rückseitigen Grundplatte 3 angeordnet, ausgehend von der geschlossenen Stellung erfolgt die Schwenkung der Blattabschnitte 11 hier jedoch in Richtung der Oberseite 10c. Die in der geschlossen Stellung zur frontseitigen Grundplatte 2 orientierten Vorderseiten 11a der Blattabschnitte 11 sind durch die Spiegelschicht 4 gebildet und die Hinterseiten 11b weisen die Oberflächenrauheit 5 auf.

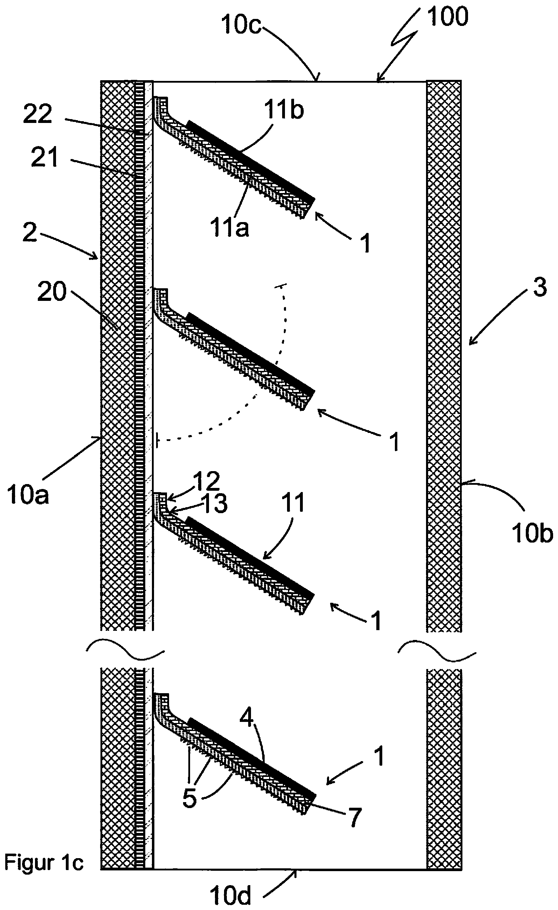

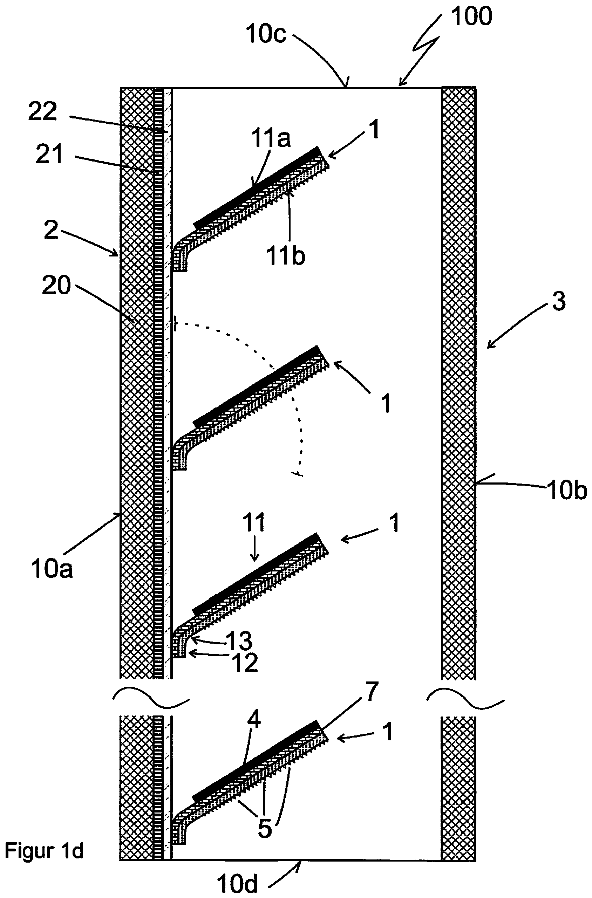

In den Ausführungsbeispielen der Fig. 1c und 1d sind die Mikroblattelemente 1 jeweils an der frontseitigen Grundplatte 2 der Module 100 angeordnet, wobei die Schwenkrichtung der Blattabschnitte 11 ausgehend von der geschlossenen Stellung, in welcher die Blattabschnitte 11 jeweils planparallel an der frontseitigen Grundplatte 2 anliegen, im Falle der Fig. 1c in Richtung der Oberseite 10c und im Falle der Fig. 1d in Richtung der Unterseite 10d orientiert ist. Im Ausführungsbeispiel der Fig. 1c weist die Vorderseite 11a der Blattabschnitte 11 die Oberflächenrauheit 5 auf und die Hinterseiten 11b sind als die Spiegelschicht 4 ausgebildet. Im Ausführungsbeispiel der Fig. 1d sind die Verhältnisse umgekehrt.

Die erfindungsgemäße Konfigurierbarkeit der Module betreffend die Anordnung der Mikroblattelemente 1 an der frontseitigen oder rückseitigen Grundplatte 2, 3 sowie betreffend die Schwenkorientierung der Blattabschnitte 11 in Kombination mit einer Zuordnung dedizierter lichttechnischer Funktionen sowohl zur Vorderseite 11a als auch zur Hinterseite 11b der Blattabschnitte 11 schafft einen hohen Grad an Anpassbarkeit und Individualisierbarkeit der Module 100 im Hinblick auf die jeweils konkret vorliegenden Anforderungen des zugeordneten Abschnitts der mit den Modulen 100 gestalteten Gebäudefassade.

Die in den Fig. 1a - 1d dargestellten Module 100 eignen sich weiterhin für die Erzielung einer Farbwirkung, insbesondere auf derjenigen Seite der Blattabschnitte 11, welche die Streuwirkung aufweisen. Dazu ist die betreffende Oberfläche mit Farbpigmenten oder Nanopartikeln zu versetzen und/oder mit dielektrischen Interferenzfiltern zu beschichten

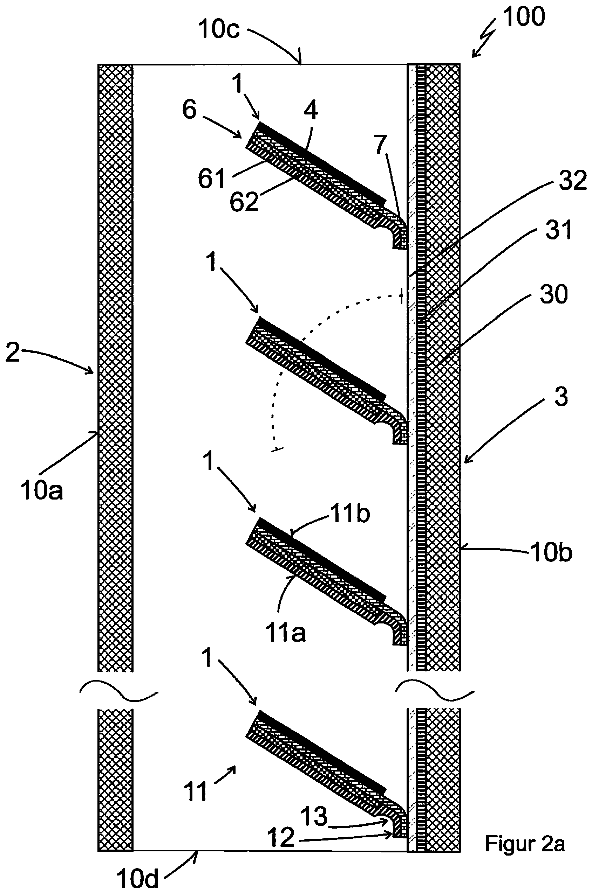

Die Fig. 2a - 2d zeigen schematische Querschnittsansichten von vier weiteren Ausführungsbeispielen des erfindungsgemäßen lichttechnischen Moduls 100, deren Mikroblattelemente 1 jeweils eine Kombination aus einer Spiegelschicht 4 und einem gegenüberliegenden photovoltaischen Schichtsystem 6 aufweisen. Im Hinblick auf die Anordnung der Mikroblattelemente 1 an den Grundplatten 2, 3, sowie im Hinblick auf die Schwenkorientierung der Blattabschnitte 11 stellen sich die Verhältnisse analog zu den vorgenannten Ausführungsbeispielen der Fig. 1a - 1d dar.

Das photovoltaische Schichtsystem 6 weist eine Absorptionswirkung für sichtbares Licht, UV-Strahlung und teilweise NIR auf und die Module 100 sind damit zur photovoltaischen Energiegewinnung ausgebildet. Das photovoltaische Schichtsystem 6 umfasst beispielhaft zwei Verbindungshalbleiterschichten 61, 62, insbesondere anorganische II-VI-Verbindungshalbleiter, III-V-Verbindungshalbleiter oder III-IV-V-Verbindungshalbleiter zwischen denen ein pn-Übergang vorliegt.

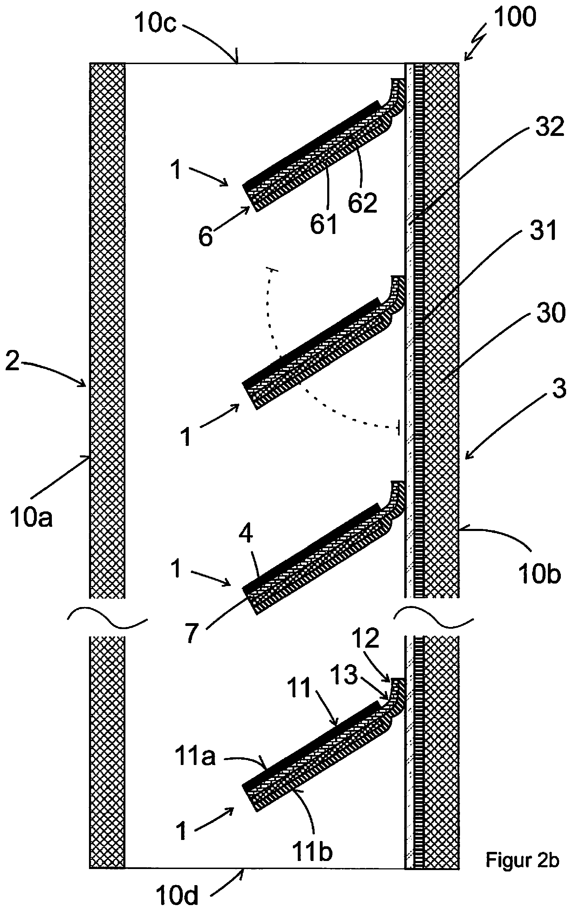

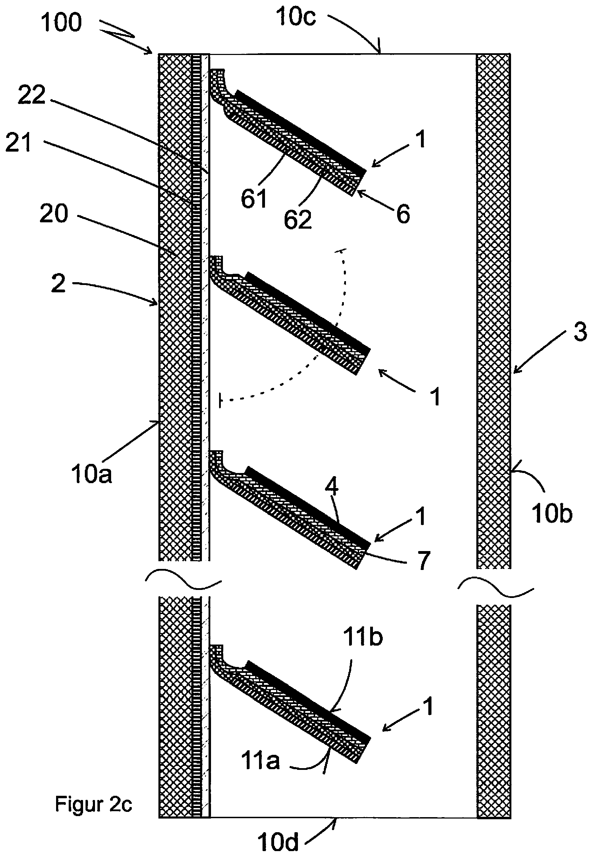

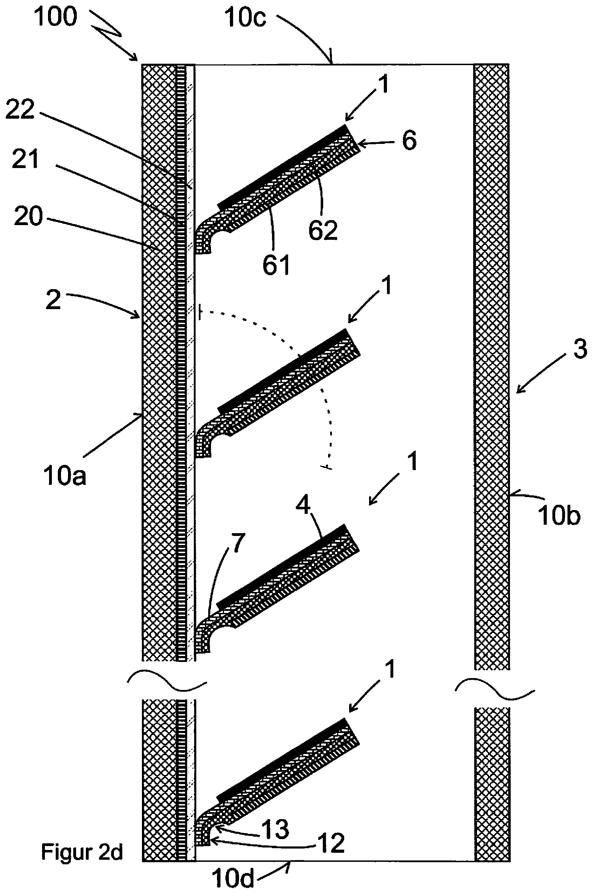

Zur effektiven photovoltaischen Energiegewinnung sind insbesondere die Ausführungsbeispiele der Fig. 2a und 2c geeignet, bei denen das photovoltaische Schichtsystem 6 jeweils auf der Vorderseite 11a der Blattabschnitte 11 angeordnet ist, welche bei geschlossener Stellung der Blattabschnitte 11 zur frontseitigen Grundplatte 2 und somit zum eingestrahlten Sonnenlicht exponiert ist. Bei einer Anordnung des photovoltaischen Schichtsystems 6 auf der Hinterseite 11b der Blattabschnitte 11 wie in den Ausführungsbeispielen der Fig. 2b und 2d fungieren die Module 100 im Wesentlichen als Energiewandler für vom Boden gestreutes, indirektes Sonnenlicht sowie für aus der zugehörigen Gebäuderäumlichkeit durch die rückseitige Grundplatte 3 eingestrahltes Kunstlicht.

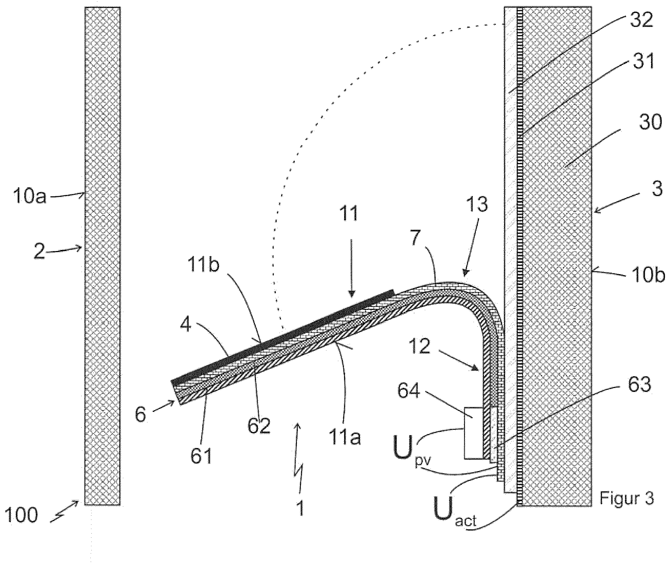

Fig. 3 zeigt eine detaillierte schematische Querschnittsteilansicht eines Ausführungsbeispiels des erfindungsgemäßen Moduls 100 mit photovoltaischem Schichtsystem 6. Das dargestellte Mikroblattelement 1 weist einen Schichtaufbau auf mit dem photovoltaischen Schichtsystem 6, umfassend die Verbindungshalbleiterschichten 61, 62 auf der Vorderseite 11a, mit der metallisch leitfähigen Elektrodenschicht 7 sowie der entlang des Blattabschnitts 11 auf die Hinterseite 11b applizierten Spiegelschicht 4.

Das Mikroblattelement 1 ist auf der rückseitigen Grundplatte 3 angeordnet, welche die lichtdurchlässige, elektrisch leitfähige Bodenschicht 31 sowie die lichtdurchlässige, elektrisch isolierende Isolationsschicht 32 umfasst. Eine am pn-Übergang des photovoltaischen Schichtsystems 6 gebildete elektrische Spannung Uₚᵥ kann im Befestigungsabschnitt 12 des Mikroblattelements 1 zwischen der Elektrodenschicht 7 und der oberseitigen Elektrode 64 abgegriffen werden.

Die Elektrodenschicht 7 fungiert insbesondere im Scharnierabschnitt 13 zudem als Elektrode für die elektrostatische Aktuierung des Mikroblattelements 1, wozu zwischen der Elektrodenschicht 7 und der Bodenschicht 31 eine elektrische Spannung Uₐₖₜ anlegbar ist. Im Blattabschnitt 11 können elektrische Oberflächenladungen auf der die Hinterseite 11b bildenden Spiegelschicht 4 und der die Vorderseite 11a bildenden Halbleiterschicht 61 induziert werden.

Im in der Fig. 3 dargestellten Zustand nimmt der Blattabschnitt 11 eine weit geöffnete Stellung ein, welche um mehr 90° von der geschlossenen Stellung abweicht. In diesem Zustand treten beim Anlegen einer Aktuierungsspannung U_{act} eine signifikante Anziehungskraft zwischen der Vorderseite 11a und der Bodenschicht 31 auf, welche der Anziehungskraft zwischen der Elektrodenschicht 7 im Scharnierabschnitt 13 und der Bodenschicht 31 entgegenwirkt. Die Anziehungskraft zwischen der Vorderseite 11a und der Bodenschicht 31 wirkt somit dem Schwenken des Blattabschnitts 11 in die geschlossene Stellung entgegen und stellt eine Behinderung der beabsichtigten Aktuierung dar. Zur Abschwächung des elektrischen Feldes zwischen der Vorderseite 11a und der Bodenschicht 31 weist der Befestigungsabschnitt 12 die dielektrische Abschirmschicht 63 auf, welche aus einem isolierenden Werkstoff mit hoher Permittivität gebildet ist.

Die Module 100 aller Ausführungsbeispiele weisen vorzugsweise hier nicht dargestellte Adressierungsnetzwerke aus elektrischen Leitungen auf, welche elektrische Verbindungen zwischen individuellen Mikroblattelementen 1 oder Gruppen von Mikroblattelementen 1 und einer randseitigen Modulschnittstelle zur computergesteuerten Adressierung und Aktuierung der Mikroblattelemente 1 und/oder zum Abgriff einer photovoltaisch generierten Spannung Uₚᵥ bilden. Die elektrischen Leitungen sind beispielsweise als metallische Dünnschichten auf der jeweiligen Grundplatte aufgebracht oder in diese integriert, insbesondere kann auch die elektrisch leitfähige Bodenschicht 21, 31 mikrostrukturiert, d.h., in voneinander unabhängig elektrisch beschaltbare Abschnitte unterteilt sein.

Vorzugsweise sind die Mikroblattelemente 1 der dargestellten Ausführungsbeispiele in regelmäßiger Matrixform aus parallelen Zeilen und parallelen Spalten angeordnet, wobei die Gesamtheit der Mikroblattelemente 1 im geschlossenen Zustand der Blattabschnitte 11 insbesondere eine im Wesentlichen vollständige Flächenüberdeckung der Grundplatten 2, 3 bildet. Dazu weisen die Mikroblattelemente 1 vorzugsweise eine rechteckförmige Kontur auf, deren Kanten eine Länge von 10 Mikrometer bis 2 Millimeter aufweisen.

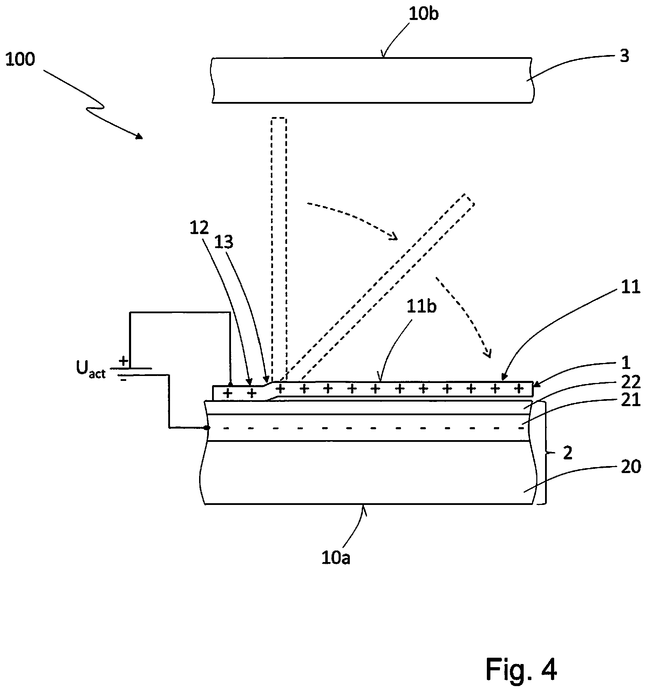

Fig. 4 zeigt eine schematische Querschnittsteilansicht eines erfindungsgemäßen Moduls 100 zur Demonstration der elektrostatischen Aktuierung. Die Darstellung beinhaltet ein einzelnes Mikroblattelement 1, welches im Zwischenraum zwischen der rückseitigen Grundplatte 3 und der frontseitigen Grundplatte 2 aufgenommen und auf Letzterer angeordnet ist. In Bezug auf die vorgesehene Anordnung an der Gebäudefassade weist das Modul 100 die Frontseite 10a und die Rückseite 10b auf.

Das Mikroblattelement 1 bildet eine Elektrode und weist zu diesem Zweck eine elektrisch leitfähige Elektrodenschicht auf. Die konkreten lichttechnischen Funktionen von Vorderseite 11a und Hinterseite 11b des Blattabschnitts 11 sind hier der Übersichtlichkeit halber nicht dargestellt. Die frontseitige Grundplatte 2 umfasst den lichtdurchlässigen Träger 20, die lichtdurchlässige und elektrisch leitfähige Bodenschicht 21 sowie die lichtdurchlässige und elektrisch isolierende Isolationsschicht 22. Das Mikroblattelement 1 ist mit seinem Befestigungsabschnitt 12 auf der Isolationsschicht 22 angeordnet und über eine Krümmung seines Scharnierabschnitts 13 vollzieht sich die Schwenkbewegung des Blattabschnitts 11. In dem in der Fig. 4 dargestellten Zustand ist zwischen dem Mikroblattelement 1 und der Bodenschicht 21 eine elektrische Aktuierungsspannung U_{act} angelegt, sodass eine elektrostatische Anziehung zwischen Bodenschicht 21 und Mikroblattelement 1 zu einem Schließen des Blattabschnitts 11 in die dargestellte horizontale, d.h., geschlossene Stellung führt. Strichliert dargestellt sind zwei geöffnete Stellungen des Blattabschnitts 11: eine im Wesentlichen orthogonal zu den Grundplatten 2, 3 orientierte Stellung, welche einer maximalen Transmission des Moduls 100 bei senkrechtem Lichteinfall entspricht, sowie eine halbgeöffnete Zwischenstellung, in welcher ein Winkel von etwa 45° zwischen dem Blattabschnitt 11 und den Grundplatten 2, 3 vorliegt. Die maximal geöffnete Stellung wird eingenommen, wenn das Mikroblattelement 1 und die Bodenschicht 21 auf demselben elektrischen Potential liegen, und in der teilgeöffneten Zwischenstellung liegt eine im Vergleich zur geschlossenen Stellung geringere Aktuierungsspannung U_{act} an. Durch geeignete Variation der angelegten Aktuierungsspannung U_{act} kann folglich eine Vielzahl an teilgeöffneten Zwischenstellung mit unterschiedlichen Winkeln des Blattabschnitts 11 gegenüber den Grundplatten 2, 3 eingestellt werden.

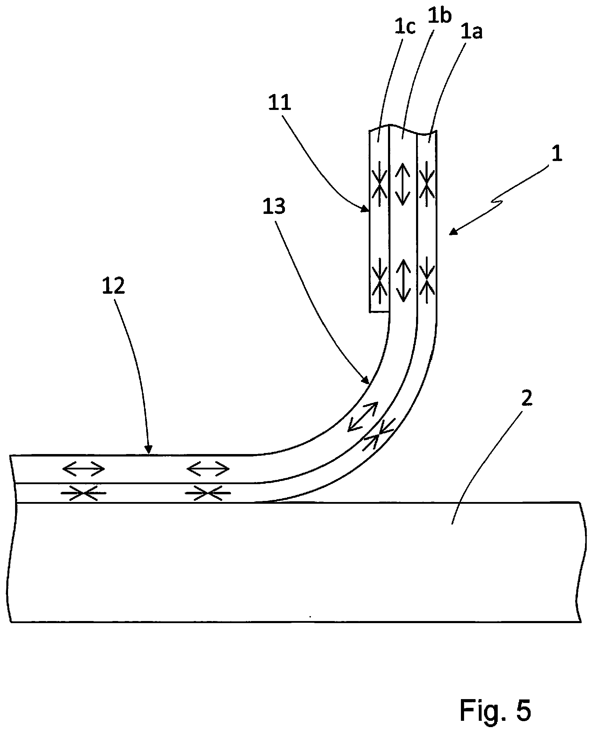

Fig. 5 zeigt eine schematische Querschnittsteilansicht eines erfindungsgemäßen Moduls zur Demonstration der Eigenspannungen eines Mikroblattelements 1. Zum Zwecke der Übersichtlichkeit sind die lichttechnischen Funktionen des Mikroblattelements 1 abermals nicht dargestellt. Das Mikroblattelement 1 weist eine auf der Grundplatte 2 angeordnete druckverspannte Schicht 1a auf sowie eine zugverspannte Schicht 1b. Die Wirkung dieser Eigenspannungen besteht in der dargestellten Krümmung des Mikroblattelements 1 entlang des Scharnierabschnitts 13, hier beispielhaft um einen Aufrollwinkel von ca. 90°. Entlang des Befestigungsabschnitts 12 wird diese Krümmung durch die formschlüssige Verbindung zur Grundplatte 2 verhindert und entlang des Blattabschnitts 11 sorgt die druckverspannte Kompensationsschicht 1c dafür, dass die globale, d.h., effektiv wirksame Eigenspannung im Blattabschnitt 11 verschwindet und dort somit keine Krümmung auftritt. Die dargestellten Schichten 1a, 1b und 1c können beispielsweise in ihrer Gesamtheit die Elektrodenschicht des Mikroblattelements 1 bilden und die lichttechnische Funktion des Mikroblattelements 1 wird durch darauf beidseitig applizierte, unverspannte Schichten oder Schichtsysteme erzeugt.

Insbesondere bei Verwendung von Methoden der Gasphasenabscheidung zur Deposition (PVD, CVD) sind üblicherweise sämtliche Schichten verspannt, d.h., beispielweise auch das photovoltaische Schichtsystem, die farbigen Schichten oder die matten Schichten mit Streuwirkung. In diesem Fall wird zweckmäßigerweise die Gesamtschichtfolge zur Kompensation der mechanischen Spannungen im planaren Blattabschnitt 11 ausgelegt.

Zur globalen Spannungskompensation im Blattabschnitt 11 sind prinzipiell bereits zwei unterschiedliche Schichten ausreichend. Hinsichtlich der Gestaltungsfreiheit betreffend die Funktionalität und die Dimensionen der Mikroblattelemente ist es jedoch vorteilhaft, mehr als zwei Schichten zu verwenden. In den Ausführungsbeispielen der Fig. 1a - 1d und 2a - 2d sind die Mikroblattelemente 1 aus drei bzw. vier Schichten gebildet, wobei je nach beabsichtigter lichttechnischer oder mikromechanischer Funktionalität auch eine noch größere Anzahl an Schichten zweckmäßig oder notwendig sein kann.

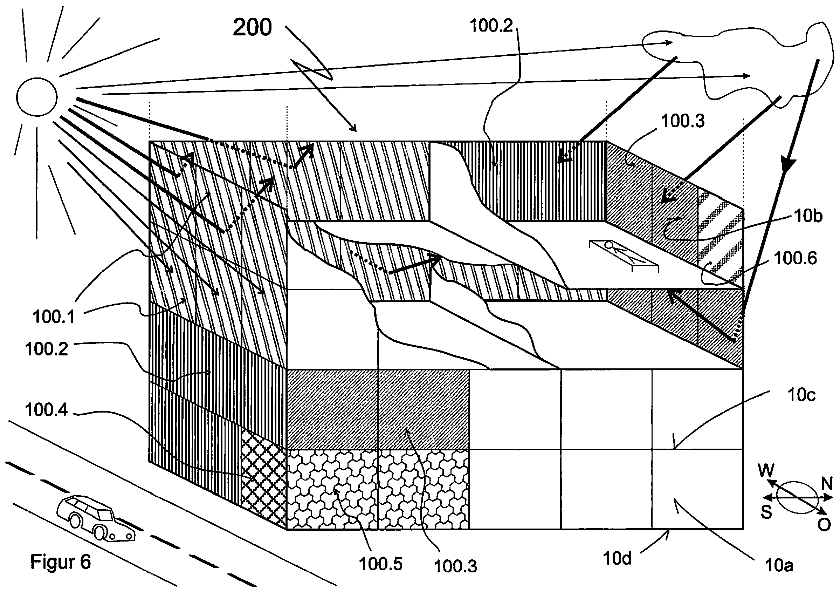

Fig. 6 zeigt eine schematische Ansicht einer Gebäudefassade mit einem erfindungsgemäßen System 200 aus lichttechnischen Modulen 100. Die Module 100 kleiden die Gebäudefassade vorliegend beispielhaft vollständig aus, wobei die Rückseiten 10b der Module 100 in Richtung des Gebäudeinneren orientiert sind, d.h., dass die Frontseiten 10a nach außen exponiert sind, und wobei die Oberseiten 10c der Module 100 obenliegend orientiert sind. Die Orientierung der Seiten 10a - 10d sind stellvertretend an zwei Modulen 100 dargestellt. Die Konfiguration der Module 100 betreffend die Anordnung der jeweiligen Mikroblattelemente sowie die Schwenkrichtung und die lichttechnische Wirkung der Vorderseiten und der Hinterseiten der zugehörigen Blattabschnitte sind an die lichttechnischen Anforderungen der jeweiligen Abschnitte der Gebäudefassade angepasst. Die zur Darstellung verwendeten unterschiedlichen Füllmuster der Module 100 kennzeichnen die jeweilige Modulkonfiguration, nicht jedoch eine konkrete Aktuierungssituation, d.h., Stellung der Blattabschnitte der Mikroblattelemente. Die zum vorliegenden Ausführungsbeispiel passenden Himmelsrichtungen sind anhand der schematischen Windrose dargestellt.

An der Südfassade herrscht die intensivste Sonneneinstrahlung, sodass hier eine Befähigung der Module 100 zur photovoltaischen Energiegewinnung besonders wirkungsvoll genutzt werden kann. Zudem ist bei der Ausgestaltung des Systems 200 zu beachten, dass die Südfassade zur angrenzenden Fahrstraße ausgerichtet ist, sodass eine Blendung des Verkehrs oder von oben oder seitlich in die Fahrzeuge einfallende "Lichtblitze" durch eine von den Modulen 100 ausgehende Spiegelwirkung vermieden werden muss.

Die in den oberen Etagen der Südfassade angebrachten Module 100.1 weisen auf der Vorderseite der Blattabschnitte der Mikroblattelemente ein photovoltaisches Schichtsystem auf, und die Hinterseiten weisen eine Spiegelwirkung auf. Beispielsweise entsprechen die Module 100.1 dem Ausführungsbeispiel der Fig. 2a, bei welchem die Mikroblattelemente auf der rückseitigen Grundplatte angeordnet sind und die Verschwenkung der Blattabschnitte ausgehend von der geschlossenen Stellung in Richtung der Unterseite 10d erfolgt. Das photovoltaische Schichtsystem wirkt lichtabsorbierend, sodass für Passanten und insbesondere den Straßenverkehr keine Blendung durch Spiegelwirkung auftritt. Die Blattabschnitte der Module 100.1 liegen beispielhaft in einer teilgeöffneten Stellung vor, sodass eine Lichtlenkung des auftreffenden Sonnenlichtes in die hinter der Fassade befindlichen Räumlichkeiten erfolgt.

Ganz allgemein wird die Aktuierung der Mikroblattelemente, d.h., die Stellung der Blattabschnitte im Tagesverlauf typischerweise fortlaufend an den Sonnenstand und den Nutzerbedarf angepasst. Beispielsweise kann zur Mittagszeit eine vollständig geschlossene oder teilweise geschlossene Stellung eingenommen sein, wodurch der Innenraum vollkommen oder nahezu abgeschattet wird und zugleich eine effiziente Sonnenexposition der photovoltaisch aktiven Vorderseiten der Blattabschnitte vorliegt. Dabei entspricht eine vollständig geschlossene Stellung typischerweise nicht dem Optimum hinsichtlich der photovoltaischen Energiegewinnung, da der Einfallswinkel der Sonnenstrahlen auf die Frontseite der Module von 90° stark abweichen kann. Jedoch ist eine teilgeöffnete Stellung der Blattabschnitte unter Bildung eines Winkels von 90° mit den einfallenden Sonnenstrahlen ebenfalls nicht zwangsläufig optimal, da sich in diesem Fall benachbarte Mikroblattelemente gegenseitig abschirmen können. Vielmehr liegt das Optimum maximalen photovoltaischen Wirkungsgrades zwischen den vorgenannten Stellungen und die Aktuierung der Mikroblattelemente kann mittels des Steuergerätes vorzugsweise derart gesteuert und/oder geregelt werden, dass das verfügbare Sonnenlicht im Tagesverlauf stets optimal genutzt wird.

Die Module 100.2 weisen auf der Vorderseite der Blattabschnitte der Mikroblattelemente ein photovoltaisches Schichtsystem auf, und die Hinterseiten weisen eine Streuwirkung auf. Beispielsweise sind die Mikroblattelemente auf der frontseitigen Grundplatte angeordnet und die Verschwenkung der Blattabschnitte ausgehend von der geschlossenen Stellung erfolgt in Richtung der Unterseite 10d der Module 100.2. Bei geschlossener Stellung der Blattabschnitte bewirkt die Streuwirkung der Hinterseiten einen matten optischen Eindruck für einen Betrachter in der zugehörigen Räumlichkeit, d.h., im Gegensatz zum Fall der Module 100.1 liegt hier keine großflächige Spiegelwirkung vor, welche in gewissen Räumlichkeiten, insbesondere in öffentlich genutzten Bereichen, als unpassend empfunden werden könnte. Alternativ kann eine inwärts gerichtete Spiegelwirkung erwünscht sein, beispielsweise nach Art eines Spiegelsaals eines Restaurants, wodurch ein vergrößerter Raumeindruck und eine bessere Ausleuchtung erzeugbar sind.

Die an der Ostfassade angebrachten Module 100.3 weisen auf der Vorderseite der Blattabschnitte der Mikroblattelemente eine Spiegelwirkung und auf der Hinterseite eine Streuwirkung auf. Beispielsweise entsprechen die Module 100.3 dem Ausführungsbeispiel der Fig. 1d, bei welchem die Mikroblattelemente auf der frontseitigen Grundplatte angeordnet sind und die Verschwenkung der Blattabschnitte ausgehend von der geschlossenen Stellung in Richtung der Unterseite 10d erfolgt. Aufgrund des im Osten nur tiefen Sonnenstandes kann die Spiegelwirkung bei geschlossener Stellung der Blattabschnitte nicht zu einer Beeinträchtigung des Verkehrs durch Lichtreflexe führen. Die Module 100.3 erzeugen eine zielgerichtete Lichtlenkung in das Gebäudeinnere, ohne von dort aus betrachtet eine Verspiegelung im geschlossenen Zustand zu bilden.

Die in der untersten Etage der Gebäudefassaden angebrachten Module 100.4 und 100.5 erzeugen mittels der Vorderseite der Blattabschnitte der Mikroblattelemente dedizierte Farbeindrücke, und die Hinterseiten weisen eine Spiegelwirkung auf. Die von den Vorderseiten ausgehenden Farbeindrücke basieren beispielsweise auf dielektrischen Beschichtungen oder auf Farbpigmenten. Derartig farbig wirkende Module 100.4 und 100.5 nehmen insbesondere eine Design-Funktion wahr. Beispielsweise können auf jeder Front der Gebäudefassade unterschiedliche Farbeindrücke oder Farbmuster erzeugbar sein, insbesondere auch Schriftzüge oder Logos.

Die Westfassade ist abschnittsweise ebenfalls mit Modulen 100.2 zur photovoltaischen Energiegewinnung ausgestattet, d.h., mit einem photovoltaischen Schichtsystem auf der Vorderseite und mit einer matten Hinterseite der Blattabschnitte der Mikroblattelemente. Im Falle der oben rechts dargestellten Räumlichkeit mit einem Schläfer sind die Blattabschnitte aller Module 100.2, sowie der Module 100.3 und 100.6 der Nordfassade, in die geschlossene Stellung verbracht, sodass der Raum abgedunkelt vorliegt.

Die Nordfassade wird durch indirektes Sonnenlicht bestrahlt, welches insbesondere von Wolken oder dem Erdboden (beispielsweise auch durch Schnee) diffus gestreut wird. Auch für dieses indirekte Licht kann eine dedizierte Lichtlenkung und/oder photovoltaische Nutzung sinnvoll sein, wobei vorliegend beispielhaft lediglich eine Lichtlenkung mittels der Module 100.3, welche dem Ausführungsbeispiel der Fig. 1d entsprechen, und des Moduls 100.6 vorgesehen ist. Das Modul 100.6 umfasst Mikroblattelemente, deren Blattabschnitte sowohl auf der Vorderseite als auch auf der Hinterseite eine Spiegelwirkung aufweisen. Neben der Lichtlenkwirkung für von außen einfallendem Licht kann mittels des Moduls 100.6 in geschlossener Stellung somit im Bedarfsfall ein großformatiger Spiegel für einen Nutzer gebildet werden. Insbesondere kann das Modul 100.6 zu diesem Zwecke individuell, d.h., unabhängig von den übrigen Modulen aktuierbar ausgebildet sein.

Eine wesentliche Anwendung des erfindungsgemäßen Systems 200 betrifft Energieeinsparungen und das Wärmemanagement im Gebäude. Mittels der Gestaltung der Gebäudefassade mit den erfindungsgemäßen lichttechnischen Modulen 100 kann im Sommer eine Aufheizung der Räume stark reduziert werden, während im Winter möglichst viel der wertvollen Sonnenenergie, inklusive der Wärmestrahlung, eingefangen werden kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 100: lichttechnisches Modul
- 200: System zur Gestaltung einer Gebäudefassade
- 10a: Frontseite
- 10b: Rückseite
- 10c: Oberseite
- 10d: Unterseite
- 1: Mikroblattelement
- 1a: druckverspannte Schicht
- 1b: zugverspannte Schicht
- 1c: Kompensationsschicht
- 11: Blattabschnitt
- 11a: Vorderseite
- 11b: Hinterseite
- 12: Befestigungsabschnitt
- 13: Scharnierabschnitt
- 2: frontseitige Grundplatte
- 3: rückseitige Grundplatte
- 20, 30: Träger
- 21, 31: Bodenschicht
- 22, 32: Isolationsschicht
- 4: Spiegelschicht
- 5: Oberflächenrauheit
- 6: photovoltaisches Schichtsystem
- 61, 62: Verbindungshalbleiter
- 63: Abschirmschicht
- 64: Elektrode
- 7: Elektrodenschicht
- Uₚᵥ: photovoltaische Spannung
- U_{act}: Aktuierungsspannung

## Patentansprüche

1. Lichttechnisches Modul (100) für eine Gebäudefassade, insbesondere für eine Verglasung, wobei das Modul (100) in Bezug auf die vorgesehene Anordnung an der Gebäudefassade eine Frontseite (10a), eine Rückseite (10b), eine Oberseite (10c) und eine Unterseite (10d) aufweist, und wobei das Modul (100) wenigstens umfasst:
- eine frontseitige Grundplatte (2) und eine rückseitige Grundplatte (3), wobei die Grundplatten (2, 3) lichtdurchlässig ausgebildet sind und wobei zwischen den Grundplatten (2, 3) ein Zwischenraum gebildet ist, und
- eine Mehrzahl von in dem Zwischenraum aufgenommenen Mikroblattelementen (1), wobei jedes Mikroblattelement (1) einen lichtundurchlässigen Blattabschnitt (11) mit einer lichttechnischen Vorderseite (11a) und einer lichttechnischen Hinterseite (11b) aufweist, und wobei jedes Mikroblattelement (1) mittels eines randseitigen Befestigungsabschnitts (12) scharnierartig auf der frontseitigen Grundplatte (2) oder auf der rückseitigen Grundplatte (3) angeordnet ist, derart, dass jeder Blattabschnitt (11) ausgehend von einer lichtundurchlässigen geschlossenen Stellung, in der der Blattabschnitt (11) planparallel an der Grundplatte (2, 3) anliegt,
um eine horizontale Schwenkachse in Richtung der Oberseite (10c) oder der Unterseite (10d) in wenigstens eine lichtdurchlässige geöffnete Stellung schwenkbar ist, und wobei die Vorderseite (11a) oder die Hinterseite (11b) eine Spiegelwirkung für sichtbares Licht und/oder nahes Infrarot aufweist, wobei die jeweils andere Seite (11a, 11b) des Blattabschnitts (11) eine davon abweichende lichttechnische Wirkung aufweist.

2. Modul (100) nach Anspruch 1,
**dadurch gekennzeichnet,**
**dass** die Vorderseite (11a) oder die Hinterseite (11b) der Blattabschnitte (11) als Spiegelschicht (4) aus einem Metall ausgebildet sind.

3. Modul (100) nach Anspruch 1 oder 2,
**dadurch gekennzeichnet,**
**dass** die Vorderseite (11a) oder die Hinterseite (11b) der Blattabschnitte (11) eine Streuwirkung für sichtbares Licht aufweisen, wobei die Vorderseite (11a) oder die Hinterseite (11b) insbesondere eine zweckmäßige Oberflächenrauheit (5) aufweisen.

4. Modul (100) nach einem der vorgenannten Ansprüche,
**dadurch gekennzeichnet,**
**dass** die Vorderseite (11a) oder die Hinterseite (11b) der Blattabschnitte (11) eine Absorptionswirkung für sichtbares Licht und/oder nahes Infrarot aufweisen, wobei die Vorderseite (11a) oder die Hinterseite (11b) insbesondere ein photovoltaisches Schichtsystem (6) aufweisen und das Modul (100) insbesondere zur photovoltaischen Energiegewinnung ausgebildet ist.

5. Modul (100) nach einem der vorgenannten Ansprüche,
**dadurch gekennzeichnet,**
**dass** die Vorderseite (11a) oder die Hinterseite (11b) der Blattabschnitte (11) zur Erzeugung eines dedizierten Farbeindrucks ausgebildet sind, insbesondere mittels einer dielektrischen Beschichtung oder mittels Farbpigmenten.

6. Modul (100) nach einem der vorgenannten Ansprüche,
**dadurch gekennzeichnet,**
**dass** die Mikroblattelemente (1) jeweils einen Schichtaufbau aufweisen, welcher wenigstens eine druckverspannte Schicht (1a) und eine zugverspannte Schicht (1b) umfasst, wobei entlang des Blattabschnitts (11) jedes Mikroblattelements (1) eine druckverspannte Kompensationsschicht (1c) auf der zugverspannten Schicht (1b) angeordnet ist, derart, dass jedes Mikroblattelement (1) in die folgenden Abschnitte unterteilt ist:
- den Blattabschnitt (11), welcher global spannungsfrei ausgebildet ist und zwei im Wesentlichen planparallele Oberflächen aufweist,
- den randseitigen Befestigungsabschnitt (12), welcher starr auf einer der Grundplatten (2, 3) angeordnet ist, und
- einen dazwischenliegenden Scharnierabschnitt (13), welcher eine eigenspannungsinduzierte Krümmung aufweist, wodurch eine geöffnete Stellung des Mikroblattelements (1) gebildet ist.

7. Modul (100) nach einem der vorgenannten Ansprüche,
**dadurch gekennzeichnet,**
**dass** das Schwenken der Blattabschnitte (11) zwischen der geschlossenen Stellung und der wenigstens einen geöffneten Stellung mittels eines elektrostatischen Wirkprinzips aktuierbar ist, wozu die frontseitige Grundplatte (2) und/oder die rückseitige Grundplatte (3) eine elektrisch leitfähige Schicht aufweisen und die Blattabschnitte (11) jeweils eine Elektrode aufweisen oder bilden, derart, dass durch Anlegen von elektrischen Spannungssignalen zwischen den Elektroden und der zugehörigen Grundplatte (2, 3) einzelne Mikroblattelemente (1) und/oder Gruppen von Mikroblattelementen (1) aktuierbar sind.

8. Modul (100) nach einem der vorgenannten Ansprüche,
**dadurch gekennzeichnet,**
**dass** jedes Mikroblattelement (1) wenigstens eine elektrisch leitfähige Schicht aufweist, wodurch eine Elektrodenschicht (7) gebildet ist, wobei die zugehörige Grundplatte (2, 3) einen Schichtaufbau aufweist, welcher eine insbesondere lichtdurchlässige, elektrisch leitfähige Bodenschicht (21, 31) und eine insbesondere lichtdurchlässige, elektrisch isolierende Isolationsschicht (22, 32) umfasst, wobei der Befestigungsabschnitt (12) jedes Mikroblattelements (1) auf der Isolationsschicht (22, 32) angeordnet ist.

9. Modul (100) nach einem der vorgenannten Ansprüche,
**dadurch gekennzeichnet,**
**dass** der Befestigungsabschnitt (12) jedes Mikroblattelements (1) eine dielektrische Abschirmschicht (63) aufweist.

10. Modul (100) nach einem der vorgenannten Ansprüche,
**dadurch gekennzeichnet,**
**dass** die Vorderseite (11a) oder die Hinterseite (11b) der Blattabschnitte (11) ein photovoltaisches Schichtsystem (6) auf der Elektrodenschicht (7) aufweisen, insbesondere einen pn-Übergang basierend auf organischen Halbleitern oder anorganischen Halbleitern (61, 62).

11. Modul (100) nach einem der vorgenannten Ansprüche,
**dadurch gekennzeichnet,**
**dass** die Mikroblattelemente (1) eine rechteckförmige Kontur mit einer Kantenlänge von 10 Mikrometer bis 2 Millimeter aufweisen und/oder in regelmäßiger Matrixform aus parallelen Zeilen und parallelen Spalten angeordnet sind, wobei die Gesamtheit der Mikroblattelemente (1) im geschlossenen Zustand insbesondere eine im Wesentlichen vollständige Flächenüberdeckung der Grundplatten (2, 3) bildet.

12. Modul (100) nach einem der vorgenannten Ansprüche,
**dadurch gekennzeichnet,**
**dass** das Modul (100) ein Adressierungsnetzwerk aus elektrischen Leitungen aufweist, welche elektrische Verbindungen zwischen individuellen Mikroblattelementen (1) oder Gruppen von Mikroblattelementen (1) und einer randseitigen Modulschnittstelle zur computergesteuerten Adressierung und Aktuierung der Mikroblattelemente (1) und/oder zum Abgriff einer photovoltaisch generierten Spannung bilden.

13. System (200) zur Gestaltung einer Gebäudefassade, insbesondere einer Verglasung, wenigstens umfassend eine Mehrzahl von lichttechnischen Modulen (100) gemäß einem der vorgenannten Ansprüche und mindestens ein mit den Modulen (100) elektrisch verbundenes Steuergerät zur Aktuierung der Mikroblattelemente (1) der Module (100), wobei betreffend die Anordnung der Module (100) vorgesehen ist, die Rückseite (10b) der Module (100) in Richtung des Gebäudeinneren und die Oberseite (10c) der Module (1) obenliegend zu orientieren.

14. System (200) nach Anspruch 13,
**dadurch gekennzeichnet,**
**dass** die Module (100) individuell unterschiedliche Konfigurationen betreffend die Anordnung der Mikroblattelemente (1), die Schwenkrichtung und/oder die lichttechnische Wirkung der Vorderseiten (11a) und der Hinterseiten (11b) der Blattabschnitte (11) aufweisen.

## Claims

1. A lighting module (100) for a building facade, in particular for glazing, wherein the module (100) has a front side (10a), a rear side (10b), an upper side (10c), and a lower side (10d) with respect to the provided arrangement at the building facade, and wherein the module (100) at least comprises:
- a base panel (2) at the front side and a base panel (3) at the rear side, wherein the base panels (2, 3) are transparent and wherein an intermediate space is formed between the base panels (2, 3); and
- a plurality of microsheet elements (1), wherein each microsheet element (1) has an opaque sheet section (11) having a lighting front side (11a) and a lighting rear side (11b), and wherein each microsheet element (1) is arranged by means of a fastening section (12) at a marginal side in the manner of a hinge on the base panel (2) at the front side or on the base panel (3) at the rear side such that each sheet section (11), starting from a light impermeable closed position in which the sheet section (11) contacts the base panel (2, 3) in a plane parallel manner, is pivotable about a horizontal pivot axis in the direction of the upper side (10c) or the lower side (10d) into at least one light permeable open position, and wherein the front side (11a) or the rear side (11b) has a mirror effect for visible light and/or for near infrared light, wherein the respective other side (11a, 11b) of the sheet section (11) has a lighting effect differing therefrom.

2. A module (100) in accordance with claim 1,
**characterized in that**
the front side (11a) or the rear side (11b) of the sheet sections (11) is configured as a mirror coating (4) of a metal.

3. A module (100) in accordance with claim 1 or claim 2,
**characterized in that**
the front side (11a) or the rear side (11b) of the sheet sections (11) has a scattering effect for visible light, with the front side (11a) or the rear side (11b) in particular having an expedient surface roughness (5).

4. A module (100) in accordance with one of the preceding claims,
**characterized in that**
the front side (11a) or the rear side (11b) of the sheet sections (11) has an absorbing effect for visible light and/or near infrared, with the front side (11a) or the rear side (11b) in particular having a photovoltaic layer system (6) and the module being configured for photovoltaic energy generation.

5. A module (100) in accordance with one of the preceding claims,
**characterized in that**
the front side (11a) or the rear side (11b) of the sheet sections (11) is configured to generate a dedicated color impression, in particular by means of a dielectric coating or by means of color pigments.

6. A module (100) in accordance with one of the preceding claims,
**characterized in that**
the microsheet elements (1) each have a layer structure that comprises at least one compressive-stressed layer (1a) and one tensile-stressed layer (1b), with a compressive-stressed compensation layer (1c) being arranged on the tensile-stressed layer (1b) along the sheet section (11) of each microsheet element (1) such that every microsheet element (1) is divided into the following sections:
- the sheet section (11) that is globally stress-free and has two substantially plane-parallel surfaces;
- the fastening section (12) at the marginal side that is rigidly arranged on one of the base panels (2, 3); and
- a hinge section (13) disposed therebetween that has a curvature induced by residual stress, whereby an open position of the microsheet element (1) is formed.

7. A module (100) in accordance with one of the preceding claims,
**characterized in that**
the pivoting of the sheet sections (11) between the closed position and the at least one open position can be actuated by means of an electrostatic operating principle, for which purpose the base panel (2) at the front side and/or the base panel (3) at the rear side has/have an electrically conductive layer and the sheet sections (11) respectively have or form an electrode such that by an application of electric voltage signals between the electrodes and the associated base panel (2, 3) individual microsheet elements (1) and/or groups of microsheet elements (1) can be actuated .

8. A module (100) in accordance with one of the preceding claims,
**characterized in that**
each microsheet element (1) has at least one electrically conductive layer, whereby an electrode layer (7) is formed, with the associated base panel (2, 3) having a layer structure that comprises an in particular transparent, electrically conductive base layer (21, 23) and a transparent, electrically insulating insulation layer (22, 23), with the fastening section (12) of each microsheet element (1) being arranged on the insulation layer (22, 32).

9. A module (100) in accordance with one of the preceding claims,
**characterized in that**
the fastening section (12) of each microelement (1) has a dielectric shielding layer (63).

10. A module (100) in accordance with one of the preceding claims,
**characterized in that**
the front side (11a) or the rear side (11b) of the sheet sections (11) has a photovoltaic layer system (6) on the electrode layer (7), in particular a p-n junction based on organic semiconductors or inorganic semiconductors (61, 62).

11. A module (100) in accordance with one of the preceding claims,
**characterized in that**
the microsheet elements (1) have a rectangular contour having an edge length of 10 micrometers up to 2 mm and/or are arranged in a regular matrix shape of parallel rows and parallel columns, with the totality of the microsheet elements (1) in particular forming a substantially full surface coverage of the base panels (2, 3) in the closed state.

12. A module (100) in accordance with one of the preceding claims,
**characterized in that**
the module (100) has an addressing network of electrical leads that form electrical connections between individual microsheet elements (1) or groups of microsheet elements (1) and a module interface at the marginal side for the computer assisted addressing and actuation of the microsheet elements (1) and/or for the tapping of a photovoltaically generated voltage.

13. A system (200) for designing a building facade, in particular glazing, at least comprising a plurality of lighting modules (100) in accordance with one of the preceding claims and at least one control device electrically connected to the modules (100) for the actuation of the microsheet elements (1) of the modules (100), with provision being made relating to the arrangement of the modules (100) to orient the rear side (10b) of the modules (100) in the direction of the building interior and the upper side (10c) of the modules (1) at the top.

14. A system (200) in accordance with claim 13,
**characterized in that**
the modules (100) have individually different configurations relating to the arrangement of the microsheet elements (1), the pivot direction, and/or the lighting effect of the front sides (11a) and the rear sides (11b) of the sheet sections (11).

## Revendications

1. Module technique d'éclairage (100) pour une façade de bâtiment, en particulier pour un vitrage, le module (100) présentant, par rapport à la disposition prévue sur la façade de bâtiment, une face avant (10a), une face arrière (10b), une face supérieure (10c) et une face inférieure (10d) et le module (100) comprenant au moins :
- une plaque de base avant (2) et une plaque de base arrière (3), les plaques de base (2, 3) étant réalisées de façon à laisser passer la lumière et un espace intermédiaire étant formé entre les plaques de base (2, 3), et
- une pluralité de microéléments de feuille (1) logés dans l'espace intermédiaire, chaque microélément de feuille (1) présentant une partie de feuille (11) opaque dotée d'une face avant d'éclairage (11a) et d'une face arrière d'éclairage (11b), et chaque microélément de feuille (1) étant disposé à la manière d'une charnière sur la plaque de base avant (2) ou sur la plaque de base arrière (3) au moyen d'une partie de fixation (12) située en bordure, de telle manière que chaque partie de feuille (11) peut être pivotée autour d'un axe de pivotement horizontal, à partir d'une position fermée opaque, dans laquelle la partie de feuille (11) repose sur la plaque de base (2, 3) de manière plan-parallèle, en direction de la face supérieure (10c) ou de la face inférieure (10d) dans au moins une position ouverte laissant passer la lumière, et la face avant (11a) ou la face arrière (11b) présentant un effet de miroir pour la lumière visible et/ou le proche infrarouge, l'autre face (11a, 11b) respective de la partie de feuille (11) présentant un effet d'éclairage différent de celui-ci.

2. Module (100) selon la revendication 1,
**caractérisé en ce que**
la face avant (11a) ou la face arrière (11b) des parties de feuille (11) sont réalisées sous la forme d'une couche spéculaire (4) en métal.

3. Module (100) selon la revendication 1 ou 2,
**caractérisé en ce que**
la face avant (11a) ou la face arrière (11b) des parties de feuille (11) présentent un effet de diffusion pour la lumière visible, la face avant (11a) ou la face arrière (11b) présentant en particulier une rugosité de surface (5) fonctionnelle.

4. Module (100) selon l'une des revendications précédentes,
**caractérisé en ce que**
la face avant (11a) ou la face arrière (11b) des parties de feuille (11) présentent un effet d'absorption pour la lumière visible et/ou le proche infrarouge, la face avant (11a) ou la face arrière (11b) présentant en particulier un système de couches photovoltaïque (6) et le module (100) étant en particulier conçu pour la production d'énergie photovoltaïque.

5. Module (100) selon l'une des revendications précédentes,
**caractérisé en ce que**
la face avant (11a) ou la face arrière (11b) des parties de feuille (11) sont conçues pour générer un effet de couleur dédié, en particulier au moyen d'un revêtement diélectrique ou au moyen de pigments colorés.

6. Module (100) selon l'une des revendications précédentes,
**caractérisé en ce que**
les microéléments de feuille (1) présentent respectivement une structure en couches qui comprend au moins une couche mise en contrainte de pression (1a) et une couche mise en contrainte de traction (1b), une couche de compensation mise en contrainte de pression (1c) étant disposée sur la couche mise en contrainte de traction (1b) le long de la partie de feuille (11) de chaque microélément de feuille (1), de telle manière que chaque microélément de feuille (1) est divisé en les parties suivantes :
- la partie de feuille (11), qui est réalisée globalement exempte de contrainte et qui présente deux surfaces sensiblement plan-parallèles,
- la partie de fixation (12) située en bordure, qui est disposée rigidement sur l'une des plaques de base (2, 3), et
- une partie charnière (13) située entre les deux, qui présente une courbure induite par autocontrainte, moyennant quoi une position ouverte du microélément de feuille (1) est formée.

7. Module (100) selon l'une des revendications précédentes,
**caractérisé en ce que**
le pivotement des parties de feuilles (11) entre la position fermée et l'au moins une position ouverte peut être actionné par un principe de fonctionnement électrostatique, ce pour quoi la plaque de base avant (2) et/ou la plaque de base arrière (3) présentent une couche électriquement conductrice et les parties de feuille (11) présentent ou forment respectivement une électrode, de telle manière que, par l'application de signaux de tension électriques entre les électrodes et la plaque de base (2, 3) associée, des microéléments de feuille (1) individuels et/ou des groupes de microéléments de feuille (1) peuvent être actionnés.

8. Module (100) selon l'une des revendications précédentes,
**caractérisé en ce que**
chaque microélément de feuille (1) présente au moins une couche électriquement conductrice, moyennant quoi une couche d'électrode (7) est formée, la plaque de base (2, 3) associée présentant une structure en couches qui comprend une couche de fond (21, 31) électriquement conductrice et en particulier laissant passer la lumière et une couche d'isolation (22, 32) électriquement isolante et en particulier laissant passer la lumière, la partie de fixation (12) de chaque microélément de feuille (1) étant disposée sur la couche d'isolation (22, 32).

9. Module (100) selon l'une des revendications précédentes,
**caractérisé en ce que**
la partie de fixation (12) de chaque microélément de feuille (1) présente une couche de protection diélectrique (63).

10. Module (100) selon l'une des revendications précédentes,
**caractérisé en ce que**
la face avant (11a) ou la face arrière (11b) des parties de feuille (11) présentent un système de couches photovoltaïque (6) sur la couche d'électrode (7), en particulier une jonction PN basée sur des semi-conducteurs organiques ou des semi-conducteurs inorganiques (61, 62).

11. Module (100) selon l'une des revendications précédentes,
**caractérisé en ce que**
les microéléments de feuille (1) présentent un contour de forme rectangulaire avec une longueur d'arête de 10 micromètres à 2 millimètres et/ou sont disposés en une forme de matrice régulière constituée de lignes parallèles et de colonnes parallèles, la totalité des microéléments de feuille (1) formant, dans l'état fermé, en particulier un recouvrement surfacique complet des plaques de base (2, 3).

12. Module (100) selon l'une des revendications précédentes,
**caractérisé en ce que**
le module (100) présente un réseau d'adressage constitué de lignes électriques qui forment des liaisons électriques entre des microéléments de feuille (1) individuels ou des groupes de microéléments de feuille (1) et une interface de module en bordure pour l'adressage et l'actionnement commandés par ordinateur des microéléments de feuille (1) et/ou pour le prélèvement d'une tension générée de manière photovoltaïque.

13. Système (200) de conception d'une façade de bâtiment, en particulier un vitrage, comprenant au moins une pluralité de modules techniques d'éclairage (100) selon l'une des revendications précédentes et au moins un appareil de commande relié électriquement aux modules (100) pour l'actionnement des microéléments de feuille (1) des modules (100), dans lequel il est prévu, en ce qui concerne la disposition des modules (100), d'orienter la face arrière (10b) des modules (100) en direction de l'intérieur du bâtiment et la face supérieure (10c) des modules (1) vers le haut.

14. Système (200) selon la revendication 13,
**caractérisé en ce que**
les modules (100) présentent des configurations qui diffèrent individuellement en ce qui concerne la disposition des microéléments de feuille (1), la direction de pivotement et/ou l'effet d'éclairage des faces avant (11a) et des faces arrière (11b) des parties de feuille (11).
